# EUROPÄISCHE PATENTSCHRIFT

(11) **EP 1 323 294 B1**
(45) Veröffentlichungstag und Bekanntmachung des Hinweises auf die Patenterteilung: **23.05.2012**
(21) Anmeldenummer: 01986386.9
(22) Anmeldetag: 04.10.2001
(51) Int. Cl.: H04N 1/60

(54) **VERFAHREN UND VORRICHTUNG ZUM PROOFEN VON GERASTERTEN DRUCKDATEN UNTER BEIBEHALTUNG DER RASTERINFORMATION**
METHOD AND DEVICE FOR PROOFING RASTER PRINT DATA WHILE MAINTAINING THE RASTER INFORMATION
PROCEDE ET DISPOSITIF DE TIRAGE D'EPREUVES DE DONNEES D'IMPRESSION TRAMEES AVEC CONSERVATION DES INFORMATIONS DE TRAMAGE

(30) Priorität: 06.10.2000 DE 10049933; 11.11.2000 DE 10056057
(43) Veröffentlichungstag der Anmeldung: 02.07.2003
(73) Patentinhaber: Best GmbH, 40880 Ratingen (DE)
(72) Erfinder: SCHUPPAN, Holger, 46242 Bottrop (DE)
(74) Vertreter: Viering, Jentschura & Partner
(86) Internationale Anmeldenummer: PCT/DE2001/003760
(87) Internationale Veröffentlichungsnummer: WO 2002/030103

(56) Entgegenhaltungen:
- EP-A- 0 963 104
- WO-A-00/74372
- US-A- 5 491 558
- US-A- 5 854 883

## Beschreibung

Die Erfindung richtet sich auf ein Verfahren zum Proofen von gerasterten Druckdaten unter Beibehaltung der Rasterinformation, welche binäre Tonwerte aufweist. Weiterhin richtet sich die Erfindung auf eine Vorrichtung zum Proofen von gerasterten Druckdaten unter Beibehaltung der Rasterinformation, welche binäre Tonwerte aufweist, mit einem Prozessor.

Im Zuge der Qualitätssicherung in der Druckindustrie und gleichzeitig unter dem Druck zur Kostenreduzierung ist es bekannt, den Vorgang des Druckens auf einer Druckmaschine vor dem eigentlichen Auflagendruck auf einem anderen Gerät zu simulieren.

Dieses andere Gerät ist heutzutage üblicherweise ein Farbdrucker, welcher durch geeignete Kalibrierung mittels Farbprofilen in einer Ansteuersoftware in die Lage versetzt wird, einen Ausdruck zu erzeugen, der wesentlich kostengünstiger ist, als es mit der Druckmaschine möglich wäre, gleichzeitig aber wesentliche Merkmale des späteren Drucks auf der Druckmaschine aufweist.

Das Ergebnis des Druckens von Druckdaten auf einem Gerät, welches bestimmte Eigenschaften des später auf der Druckmaschine hergestellten Drucks simuliert, nennt man in der Druckindustrie einen Proof, den Vorgang selbst bezeichnet man als Proofen.

Anders ausgedrückt ist unter einem Proof ein Prüfdruck zur Simulation vor allem von Vierfarbdrucken als Andruckersatz zu verstehen.

Zur besseren Unterscheidung vom Ergebnis des Druckens auf der eigentlichen Druckmaschine, d. h. dem Druck, wird für den Prüfdruck im Weiteren der Begriff Proof verwendet, d. h. für das Drucken der Druckdaten auf einem Gerät, welches bestimmte Eigenschaften des später auf der Druckmaschine hergestellten Drucks simuliert.

Für die meisten Verfahren der Druckindustrie werden die zur Reproduktion vorgesehenen Druckdaten vor der Herstellung der Druckform gerastert.

Diese Rasterung ist notwendig, um Tonwertabstufungen im Druck wiedergeben zu können. Der Grund dafür ist, dass die in der Druckmaschine zu verdruckende Farbe selbst keine Abstufungen aufweist.

Deswegen wird die Menge der Farbe, die auf eine bestimmte Fläche des Bedruckmaterials gedruckt wird, über ein Raster gesteuert.

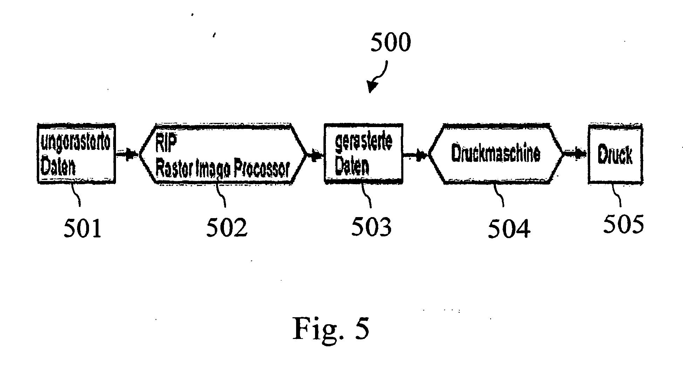

Der allgemeine Arbeitsablauf beim Drucken wird im Weiteren dargestellt anhand eines in Fig.5 dargestellten Blockdiagramms 500.

Ungerasterte Druckdaten 501 werden mittels eines Rasterbild-Prozessors 502 (Raster Image Processor, RIP) auf gerasterten Druckdaten 503 abgebildet. Die gerasterten Druckdaten 503 werden mittels einer Druckmaschine 504 gedruckt, wodurch ein Druck 505 erzeugt wird.

Die als Druckmaschine 504 bezeichnete Einheit kann eine digitale Druckmaschine sein oder eine Druckmaschine, welche gekoppelt ist mit einem Filmbelichter und Druckplattenkopierer oder mit einem digitalen. Druckplattenbelichter. Für die Einheit ist lediglich von Bedeutung, dass die Einheit die gerasterten Druckdaten 503 umsetzt zum Endergebnis, dem Drucks 505.

Die Verfahren zum Proofen von Druckdaten gemäß dem Stand der Technik können in drei Gruppen eingeteilt werden:
a.) Verfahren, welche mit ungerasterten Druckdaten arbeiten;
b.) Verfahren, die mit gerasterten Druckdaten arbeiten;
c.) Verfahren, die mit gerasterten Druckdaten arbeiten und das Raster mittels eines sogenannten Entrasterverfahrens wieder aus den Druckdaten entfernen.

Folgende Vor- und Nachteile ergeben sich aus den jeweiligen Verfahrensweisen, die im Weiteren näher erläutert werden:

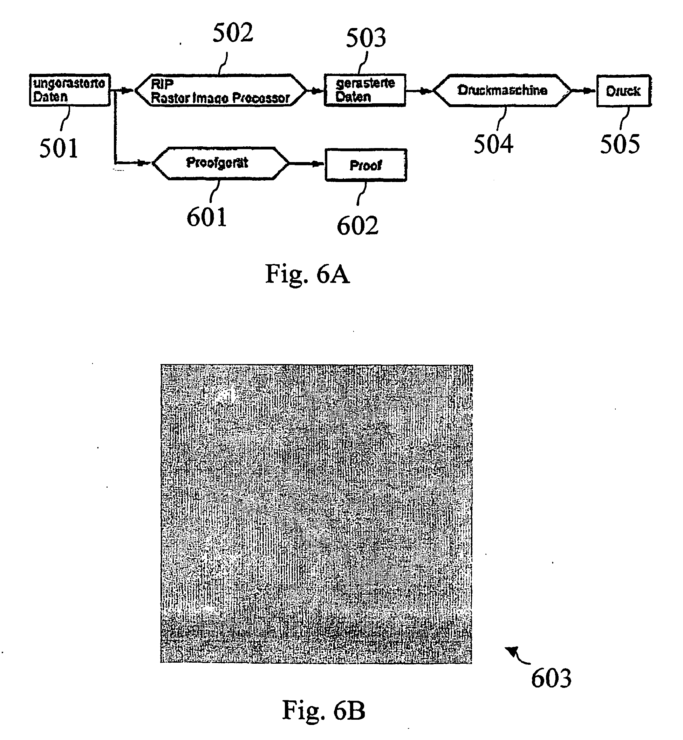

### a.) Verfahren, die mit ungerasterten Druckdaten arbeiten (vgl. Fig.6a und Fig.6b):

Bei diesem Verfahren werden, wie in dem Blockdiagramm 600 in Fig.6a dargestellt, die ungerasterten Druckdaten 501 einem Proofgerät 601 zugeführt, und von diesem in einem sogenannten Color Management System einer Farbraumtransformation unterzogen und danach in geeigneter Weise für das Proofgerät 601 gerastert und auf diesem ausgegeben, womit der Proof 602 erzeugt wird.

Mit dem ungerasterte Druckdaten 501 verwendenden Proofverfahren ist es mit guter Qualität möglich, das Farbverhalten beim Rastern und Drucken auf der Druckmaschine 504 zu simulieren.

Bei entsprechender Kalibrierung mittels Farbprofilen können die Ergebnisse, d.h. in dem Proof 602, in der Farbgebung so genau mit dem Druck 505 übereinstimmen, dass man den Proof 602 als farbverbindlich bezeichnet. Das bedeutet, dass der Proof 602 zur Beurteilung der Farbqualität des späteren Drucks 505 verwendet werden kann.

In Fig.6b ist ein Beispiel 603 eines Proofs 602 für ungerasterte Druckdaten 501, gemäß diesem Beispiel 603 ein 50 Prozent-Tonwert vor der Rasterung, dargestellt.

Nachteilig an dieser Vorgehensweise ist insbesondere, dass die Druckdaten zur Ausgabe auf dem Proofgerät 601 ebenfalls gerastert werden. Diese Rasterung auf dem Proofgerät 601 entspricht jedoch nicht der Rasterung auf der Druckmaschine 504 und kann dieser bestenfalls ähnlich sein.

Das heißt, ein mit Hilfe der ungerasterten Druckdaten 501 erstelltes Proof 602 kann dem Nutzer keinen Aufschluss über die Qualität seiner Rasterung geben.

Fehler, die bei der Rasterung entstehen, können mit einem solchen Proof 602 nicht erkannt werden.

Mögliche Fehler sind zum Beispiel ungewollte Muster in den Einzelfarben oder ein sogenanntes Moire beim Übereinanderdruck der Farben.

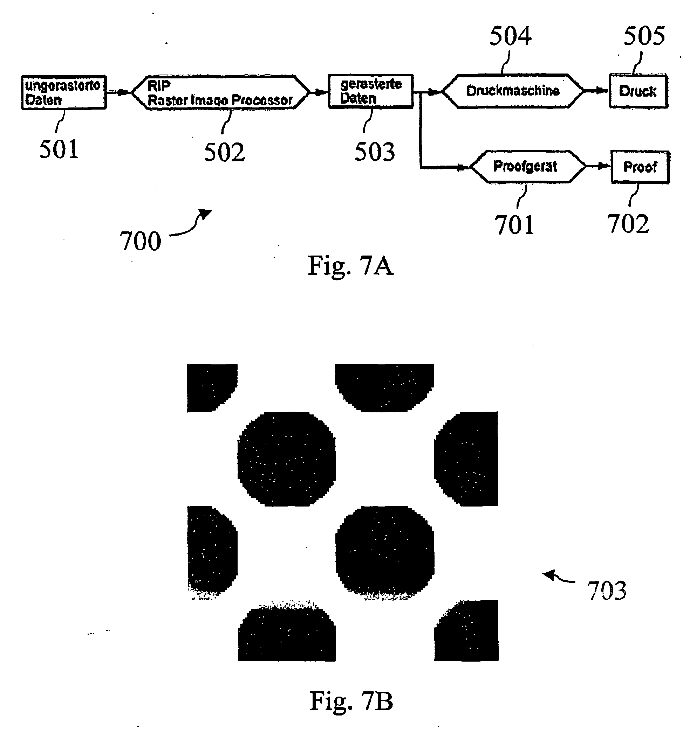

### b.) Verfahren, die mit gerasterten Druckdaten arbeiten (vgl. Fig.7a und Fig. 7b):

Bei einem Proofverfahren, welches gerasterte Druckdaten 503 verwendet, werden die ungerasterten Druckdaten 501 mittels des Rasterbild-Prozessors 502 (Raster Image Processor, RIP) auf gerasterten Druckdaten 503 abgebildet. Die gerasterten Druckdaten 503 werden einem Proofgerät 701 zugeführt, und von diesem ausgegeben, womit der Proof 702 erzeugt wird. Gemäß dieser Vorgehensweise ist eine separate Rasterung in dem Proofgerät 701 nicht erforderlich (siehe Blockdiagramm 700).

Ein Vorteil dieser Vorgehensweise ist insbesondere darin zu sehen, dass dem Anwender auf dem Proof 702 die Rasterung, wie sie später auch auf dem Druck 505 zu sehen sein wird, dargestellt wird.

Ein Nachteil dieser Vorgehensweise ist jedoch darin zu sehen, dass es nicht möglich ist, eine Farbverbindlichkeit des Proofs 702 zu erreichen.

Das liegt insbesondere darin begründet, dass beim Vorgang der Rasterung alle Tonwerte (Luminanzwerte und/oder Chrominanzwerte) auf nur zwei Tonwerte reduziert werden, nämlich einen ersten Tonwert mit "0" Prozent Farbauftrag und einen zweiten Tonwert mit "100" Prozent Farbauftrag.

Es existieren keine Zwischenstufen mehr (vgl. Fig.7b, in der ein 50 Prozent-Tonwert 703 nach der Rasterung dargestellt ist).

Bei einer durchzuführenden Farbraumtransformation würden lediglich diese beiden Farbwerte transformiert werden. Dadurch lässt sich aber keine Abstimmung auf das Farbverhalten des Proofgeräts mehr erreichen, da dafür notwendigerweise auch Zwischentöne erforderlich sind.

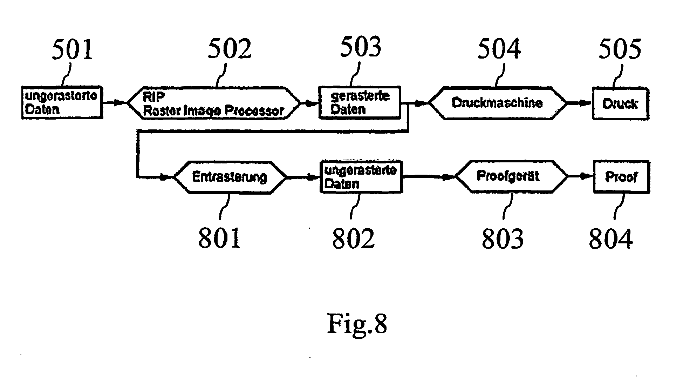

### c.) Verfahren, die mit gerasterten Druckdaten arbeiten und das Raster mittels sogenannter Entrasterverfahren wieder aus den Druckdaten entfernen (vgl. Blockdiagramm 800 in Fig.8):

Bei einem solchen Verfahren werden die gerasterten Druckdaten 503 einer Entrasterung 801 unterzogen und die somit gebildeten ungerasterten Druckdaten 802 werden einem Proofgerät 803 zugeführt und auf diesem ausgegeben, womit der Proof 804 erzeugt wird.

Anders ausgedrückt wird die Rasterinformation wieder aus dem Bild (den gerasterten Druckdaten 503) herausgerechnet, um die ursprüngliche, ungerasterte Information (ungerasterte Druckdaten 501, 802) zurückzugewinnen. Mit den ungerasterten Druckdaten 802 wird dass gemäß der unter Punkt a) beschriebenen Vorgehensweise verfahren.

Damit weist die Vorgehensweise gemäß Punkt c) die gleichen Vorteile und Nachteile auf wie die Vorgehensweise gemäß Punkt a).

Ein solches Verfahren wird in der Regel dann eingesetzt, wenn keine Möglichkeit besteht, in einem bestehenden Arbeitsablauf die ungerasterten Druckdaten 501 abzugreifen, das Hauptaugenmerk aber auf der Farbverbindlichkeit liegt.

Ein Verfahren zum Proofen von gerasterten Druckdaten unter Beibehaltung der Rasterinformationen ist aus der US-A-5,854,833 bekannt. Bei diesem Verfahren werden gerasterte Druckdaten einem Filterverfahren unterzogen, wobei durch Tiefpassfiltern der Daten unter Verwendung binärer Tonwerte Zwischentonwerte erzeugt werden. Die Zwischentonwerte sind derart ausgestaltet, dass mittels einer Farbraumtransformation transformierte Tonwerte und/oder Zwischentonwerte gebildet werden können, welche ein farbverbindliches Proof darstellen.

Der Erfindung liegt das Problem zugrunde, ein Verfahren und eine Vorrichtung zum Proofen von gerasterten Druckdaten unter Beibehaltung der Rasterinformation anzugeben, mit dem bzw. mit der die Farbverbindlichkeit des Proofs im Vergleich zu dem zu erzeugenden Druck gegenüber den bekannten Verfahren verbessert ist.

Das Problem wird durch das Verfahren und die Vorrichtung zum Proofen von gerasterten Druckdaten unter Beibehaltung der Rasterinformation mit den Merkmalen gemäß den unabhängigen Patentansprüchen gelöst.

Bei einem Verfahren zum Proofen von gerasterten Druckdaten unter Beibehaltung der Rasterinformation, welche binäre Tonwerte aufweist, werden die gerasterten Druckdaten einem Filterverfahren unterzogen, wobei die Rasterinformation beibehalten wird. Durch das Filterverfahren werden unter Verwendung der binären Tonwerte Zwischentonwerte erzeugt.

Unter den binären Tonwerten sind beispielsweise Tonwerte zu verstehen, die "0" Prozent Farbauftrag (erster binärer Tonwert) oder "100" Prozent Farbauftrag (zweiter binärer Tonwert) aufweisen.

Zwischentonwerte sind demgegenüber Tonwerte mit einem Farbauftrag zwischen "0" und "100" Prozent.

Die Zwischentonwerte sind derart ausgestaltet, dass mittels einer Farbraumtransformation transformierte Tonwerte und/oder Zwischentonwerte gebildet werden können, welche ein farbverbindliches Proof darstellen.

Eine Vorrichtung zum Proofen von gerasterten Druckdaten unter Beibehaltung der Rasterinformation, welche binäre Tonwerte aufweist, weist einen Prozessor auf, der derart eingerichtet ist, dass die oben beschriebenen Verfahrensschritte durchführbar sind.

Durch die Erfindung wird es nunmehr möglich, farbverbindliche Proofs von digitalen Druckdaten zu erstellen, die sich schon in der für den späteren Druck auf einer Druckmaschine geeigneten gerasterten Form befinden. Das gibt dem Anwender die Möglichkeit, vor dem Starten der Druckmaschine sowohl die spätere Farbgebung des Drucks als auch die Rasterinformation zu beurteilen.

Anschaulich werden erfindungsgemäß gerasterte Druckdaten verwendet, diese aber so verändert, dass einerseits wieder Zwischentöne (Zwischentonwerte) entstehen, um eine qualitativ hochwertige Farbraumtransformation durchführen zu können, auf der anderen Seite aber die Rasterinformation erhalten bleibt.

Es werden somit die Nachteile der Verfahren nach a), b) und c) vermieden, während im Wesentlichen alle Vorteile der Verfahren nach a), b) und c) in einem Verfahren zusammengefasst werden.

Anschaulich kann die Erfindung darin gesehen werden, dass die Rasterinformation nicht durch ein Entrasterverfahren herausgerechnet wird, sondern dass auf die in den Druckdaten enthaltenen Rasterpunkte beispielsweise ein sogenanntes Weichzeichnungsverfahren oder Skalierungsverhafren angewendet wird.

Anders ausgedrückt bedeutet dies, dass ein Verfahren zum farbverbindlichen Proofen von gerasterten Druckdaten unter Beibehaltung der Rasterinformation angegeben wird, bei dem die gerasterten Druckdaten einem Weichzeichnungsalgorithmus unterzogen werden, welcher die charakteristischen Rasterinformationen Rasterweite, Rasterwinkel und Punktform des Rasters erhält, gleichzeitig aber zusätzlich zu den in den Rasterdaten enthaltenen 0 Prozent und 100 Prozent - Tonwerten Zwischentonwerte erzeugt, die es erlauben, über ein in dem Proofgerät enthaltenes sogenanntes Color Management System eine Farbraumtransformation durchzuführen, deren Ergebnis ein farbverbindliches Proof ist.

Bevorzugte Weiterbildungen der Erfindung ergeben sich aus den abhängigen Ansprüchen.

Gemäß der Erfindung wird als Filterverfahren ein Weichzeichnungsverfahren eingesetzt.

Unter einem Weichzeichnungsverfahren wird ein Filterverfahren in der Bildverarbeitung verstanden, mit dem das Bild unscharf abgebildet wird. Bei dem Weichzeichnungsverfahren werden kontrastreiche Kanten geglättet, indem die am Rand der dunklen Bereiche liegenden Bildpunkte (Pixel) aufgehellt und die am Rand der hellen Bereiche liegenden Pixel abgedunkelt werden.

Bei dem Weichzeichnungsverfahren wird ein verwendeter Weichzeichnungsradius so ausgewählt, daß das Weichzeichnungsverfahren die Anforderungen erfüllt:
- Aufrechterhalten der Rasterinformation; und
- Erzeugen von Zwischentonwerten derart, daß anhand der Zwischentonwerte ein Farbmanagement zum Erzeugen eines farbverbindlichen Proofs durchführbar ist.

Der Schritt des Auswählens des Weichzeichnungsradius kann folgende Schritte umfassen:
a) Berechnen der Häufigkeitsverteilung P(f) der prozentualen Flächendeckung f (0 ≤ P ≤ 1, 0 ≤ f ≤ 100%) für einen vorgegebenen Weichzeichnungsradius R= R₀;
b) Bestimmen des Maximums Pₘₐₓ (f₀) ;
c) Ermitteln des größten Wertes f₁ und des kleinsten Wertes f₂ mit f₁ < f₀ < f₂, für die gilt P (f₁) < P' und P (f₂) < P' (0 < P' < 1) ;
d) falls f₂-f₁ ≤ Δf' (0 < Δf' < 100 %) : Berechnen der Häufigkeitsverteilung P(f) für einen um einen vorgegebenen Wert ΔR erhöhten Weichzeichnungsradius,;
e) Wiederholen der Schritte b)-d) bis zu einem Weichzeichnungsradius R, bei dem f₂-f₁ > Δf' ist;
f) Ausgeben des Weichzeichnungsradius R.

Der Wert Δf' kann beispielsweise im Bereich von 20%-30%, vorzugsweise bei 25% liegen. Der Wert P' kann beispielsweise im Bereich zwischen 0.15 und 0.25, vorzugsweise bei 0.2 liegen.

Alternativ wird als Filterverfahren ein Skalierungsverfahren eingesetzt, beispielsweise ein bikubisches Skalierungsverfahren oder ein bilineares Skalierungsverfahren.

Als binärer Tonwert und/oder als Zwischentonwert kann ein Luminanzwert und/oder ein Chrominanzwert verwendet werden, der/die einem Bildpunkt zugeordnet ist/sind.

Weiterhin kann als Rasterinformation
- die Rasterweite, und/oder
- der Rasterwinkel, und/oder
- die Punktform des Rasters
verwendet werden.

Ein Ausführungsbeispiel der Erfindung ist in den Figuren dargestellt und wird im Weiteren näher erläutert.

Es zeigen
- Figuren 1a und 1b: ein Blockdiagramm, in dem die einzelnen Verfahrensschritte eines Ausführungsbeispiels der Erfindung (Figur 1a) und ein Beispiel eines mittels des Verfahrens gemäß dem Ausführungsbeispiel erhaltenen Proofs (Figur 1b) dargestellt sind;
- Figur 2a und 2b: ein Blockdiagramm, in dem ein Bildausschnitt, welches gerasterte Daten (Figur 2a) darstellt und ein zugehöriges Histogramm (Figur 2b)zur Darstellung der prozentualen Verteilung der Farbtonwerte in dem Bildausschnitt aus Figur 2a;
- Figur 3a und 3b: ein Blockdiagramm eines Bildausschnitts, der durch Anwendung eines Gauß'schen Weichzeichnungsverfahrens mit nicht optimierten Parametern auf den Bildausschnitt gemäß Figur 2a erhalten wurde und ein zugehöriges Histogramm (Figur 3b) zur Darstellung der prozentualen Verteilung der Farbtonwerte in dem Bildausschnitt aus Figur 3a;
- Figur 4a: ein Histogramm zur Darstellung der prozentualen Verteilung der Farbtonwerte in einem Bildausschnitt, der durch Anwendung eines erfindungsgemäßen Weichzeichnungsverfahrens mit optimierten Parametern auf den Bildausschnitt gemäß Figur 2a erhalten wurde (Figur 4a);
- Figur 4b: einen Algorithmus zur Berechnung des bei dem Weichzeichnungsverfahren gemäß Figur 4a verwendeten Weichzeichnungsradius;
- Figur 5: ein Blockdiagramm, in dem ein allgemein üblicher Arbeitsablauf zum Erstellen eines Drucks dargestellt ist;
- Figuren 6a und 6b: ein Blockdiagramm, in dem die einzelnen Verfahrensschritte eines Verfahrens, das mit ungerasterten Druckdaten arbeitet (Figur 6a) und ein Beispiel eines mittels des Verfahrens aus Figur 6a erhaltenen Proofs (Figur 6b), dargestellt sind;
- Figuren 7a und 7b: ein Blockdiagramm, in dem die einzelnen Verfahrensschritte eines Verfahrens, das mit gerasterten Druckdaten arbeitet (Figur 7a) und ein Beispiel eines mittels des Verfahrens aus Figur 7a erhaltenen Proofs (Figur 7b), dargestellt sind; und
- Figur 8: ein Blockdiagramm, in dem die einzelnen Verfahrensschritte eines Verfahrens, das mit entrasterten Druckdaten arbeitet, dargestellt sind.

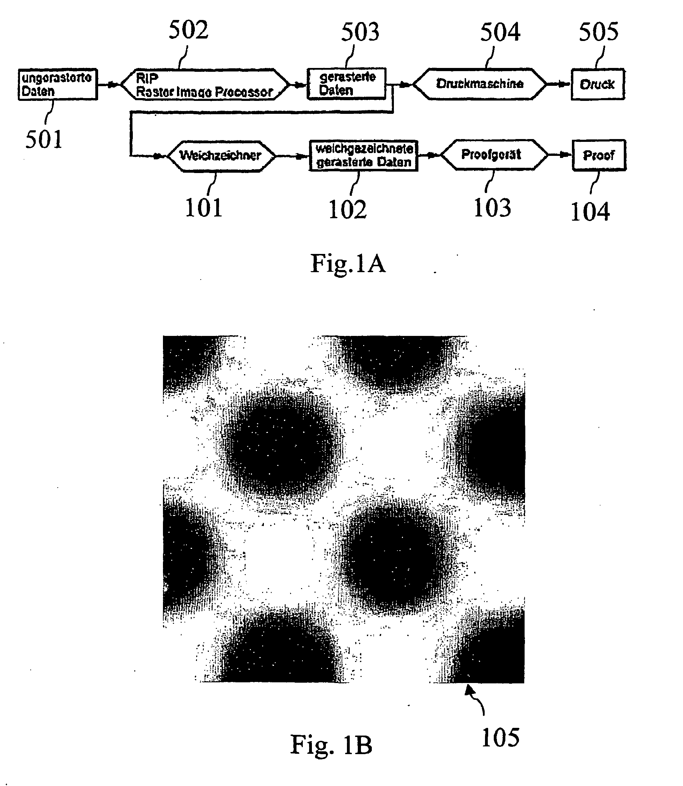

Ungerasterte Druckdaten 501 werden mittels eines Rasterbild-Prozessors 502 (**R**aster **I**mage **P**rocessor, RIP) auf gerasterte Druckdaten 503 abgebildet (vgl. **Fig.1b**).

Die gerasterten Druckdaten 503 werden mittels einer Druckmaschine 504 gedruckt, wodurch ein Druck 505 erzeugt wird.

Die gerasterten Druckdaten 503 weisen Rasterinformation auf, wobei ein Raster charakterisiert wird durch den Abstand der Mittelpunkte der Rasterpunkte (Rasterweite), durch den Winkel, den eine durch diese Mittelpunkte gezogene Linie mit der Horizontalen einnimmt (Rasterwinkel), sowie durch die Form der Rasterpunkte (üblich sind z.B. runde Punkte, Ellipsen, Linien, Quadrate; Kreuze).

Zum Erstellen eines Proofs werden die gerasterten Daten 503 gemäß diesem Ausführungsbeispiel einem Weichzeichnungsverfahren 101 unterzogen, wodurch Zwischentöne (Zwischentonwerte) mit einem Farbauftrag mit Prozenten zwischen 0 und 100 Prozent Farbauftrag erzeugt werden.

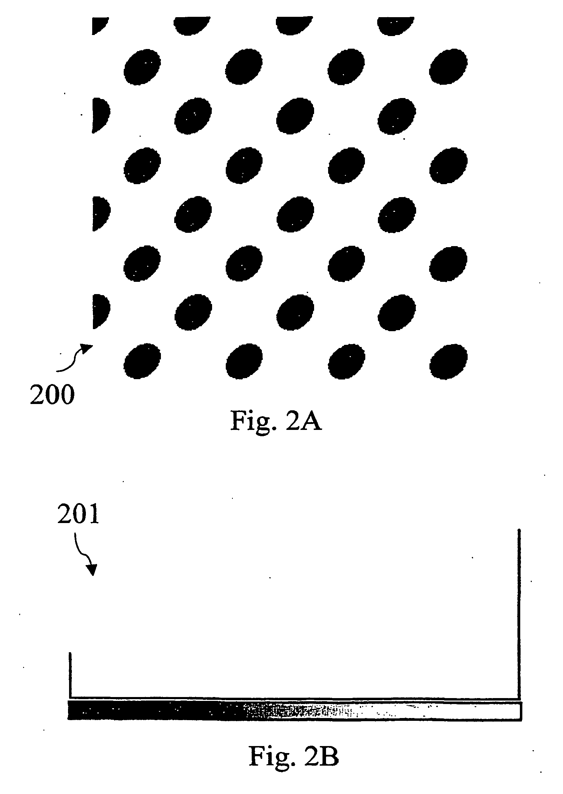

Durch ein geeignet ausgewähltes Weichzeichnungsverfahren 101 mit den geeignet gewählten Parametern ist es möglich, wieder so viele Tonwertstufen zu erzeugen, dass auch die Farbverbindlichkeit gewährleistet werden kann. Die Anforderungen an ein geeignetes Weichzeichnungsverfahren werden unter Bezugnahme auf **Fig.2** **-** **Fig.4** noch näher erläutert.

Die mittels des Weichzeichnungsverfahrens 101 gebildeten Daten 102 werden einem Proofgerät 103 zugeführt und von diesem ausgegeben, wodurch ein Proof 104 gebildet wird.

Ein Beispiel eines solchen Ergebnisses des Weichzeichnens 101 für einen 50 Prozent-Tonwert nach erfolgter Rasterung und anschließendem Weichzeichnen 101 ist in **Fig. 1b** dargestellt.

Man erkennt aus **Fig.1b****,** dass die Rasterinformation an sich erhalten geblieben ist.

Alle oben beschriebenen Elemente der Rasterinformation sind nach wie vor in **Fig. 1b** erkennbar.

Bei der Auswahl eines geeigneten Weichzeichnungsverfahrens ist jedoch darauf zu achten, daß der Grad der Weichzeichnung weder zu hoch noch zu niedrig gewählt wird, wie im folgenden näher erläutert wird.

Insbesondere sollte das angewendete Weichzeichnungsverfahren die folgenden Eigenschaften erfüllen:
I) Aufrechterhalten der Rasterinformation
II) Erzeugen von Zwischentonwerten derart, daß anschließend mit diesen Zwischentonwerten ein wirksames Farbmanagement möglich ist.

### Zu Anforderung I):

Die Aufrechterhaltung der Rasterinformation ist nicht mehr gewährleistet, wenn das Weichzeichnen die Rasterinformation aus dem Bild herausfiltert, wenn also ein zu starkes Weichzeichnen durchgeführt wird. Dies bedeutet, daß der Radius des Weichzeichners nicht zu groß gewählt werden darf.

### Zu Anforderung II):

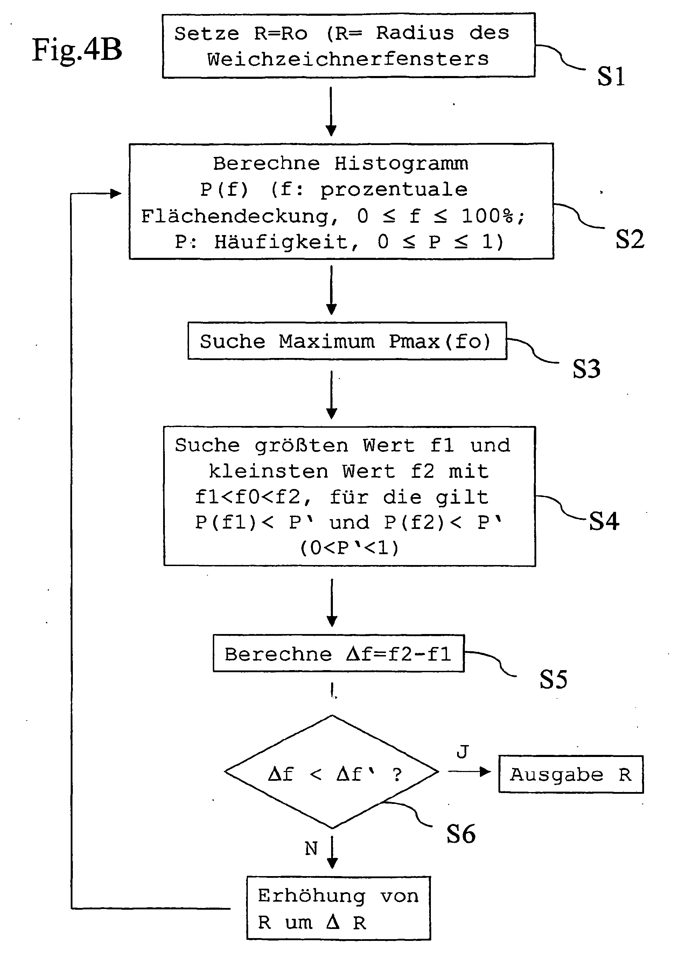

Im Falle einer zu schwachen Weichzeichnung reichen die erzeugten Zwischentonwerte nicht aus, um ein gezieltes Farbmanagement durchführen zu können. Infolgedessen kann keine hinreichende Abstimmung auf das Farbverhalten des Proofgerätes erfolgen, so daß keine Farbverbindlichkeit des Proofs erreicht wird. Ein Algorithmus zur Berechung geeigneter Weichzeichnungsparameter wird in Zusammenhang mit **Fig.4b** noch näher beschrieben.

In **Fig.2a** ist zunächst ein Ausgangsbild 200 bzw. der Ausschnitt eines Ausgangsbildes ohne Weichzeichnung, d.h. ein reines Rasterbild mit einer 20-prozentigen Flächendeckung dargestellt.

In **Fig.2b** ist ein zugehöriges Histogramm 201 dargestellt. Das Histogramm gibt auf der Abszisse (x-Achse) die Flächendeckungswerte f, d.h. den prozentualen Grad der Farbbedeckung in dem jeweiligen Bildausschnitt an, wobei f im Bereich (0 % ≤ f ≤ 100 %) liegt. Die Farbbedeckung f ist zudem am unteren Rand des Histogramms schematisch dargestellt. Die Werte P auf der Ordinate (y-Achse) geben die prozentuale Häufigkeit der auf der Abzisse dargestellten Flächendeckungswerte in dem jeweiligen Bildausschnitt an, wobei P im Bereich (0 ≤ P ≤ 1) liegt.

Wie aus **Fig.2b** ersichtlich, kommt die 20-prozentige Flächendeckung in dem Bildausschnitt 200 dadurch zustande, daß 20 % der Gesamtfläche eine 100-prozentige Flächendeckung aufweisen und 80 % der Gesamtfläche weiß bleiben, d.h. eine 0-prozentige Flächendeckung aufweisen.

Auf dem Bildausschnitt 200 läßt sich ein effektives Farbmanagament, bei dem etwa gezielt die Bereiche um eine 20-prozentige Farbbedeckung verändert werden sollen, nicht durchführen, da es im Bildausschnitt 200 keine Bereiche mit f= 20 %, sondern nur Bereiche mit f= 0 % oder mit f= 100 % gibt. Diese lassen sich jedoch nicht ändern, da sie dem Papierhintergrund bzw. dem Bereich mit voller Flächendeckung entsprechen. Mangels der Existenz von Zwischentonwerten f mit 0 < f < 100% ist somit ein Farbmanagement und damit das Erstellen eines farbverbindlichen Proofs nicht durchführbar, so daß die obige Anforderung II) nicht erfüllt ist.

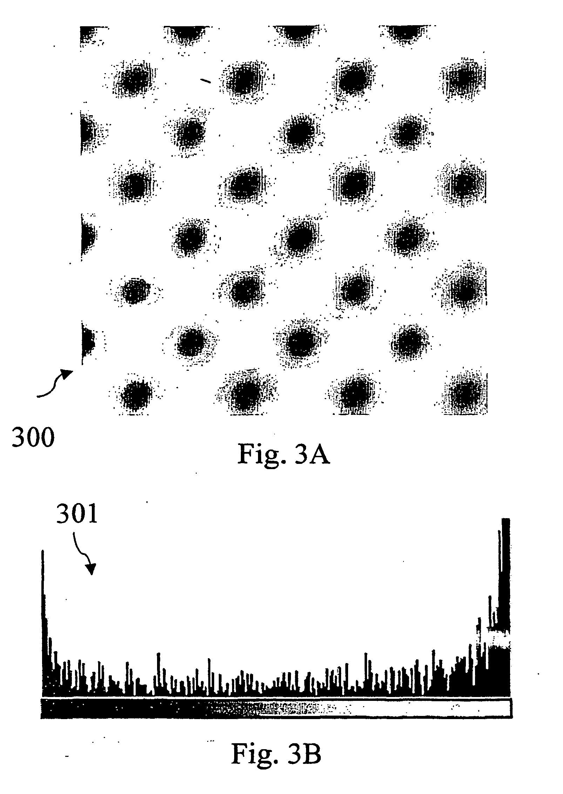

In **Fig.3a** ist ein Bildausschnitt 300 dargestellt, der durch Anwendung eines Gauß'schen Weichzeichnungsverfahrens auf den Bildausschnitt 200 gemäß **Fig.2a** erhalten wurde. Wie aus dem zugehörigen Histogramm 301 in **Fig.3b** ersichtlich, liegen hier zwar zahlreiche Zwischentonwerte vor, diese weisen jedoch eine sehr breite Verteilung ohne ausgeprägte Maxima bzw. Minima auf. Infolgedessen hätte beispielsweise die Anwendung eines Farbmangements zur gezielten Beeinflussung des Bereichs mit 20-prozentiger Farbbedeckung in dem Bildausschnitt 300 zur Folge, daß etwa auch der Bereich mit 80-prozentiger Bedeckung in etwa gleicher Weise beeinflußt wird. Auch hierbei ist somit ein gezieltes Farbmanagement und damit das Erzeugen eines farbverbindlichen Proofs nicht möglich, so daß hier ebenfalls die obige Anforderung II) nicht erfüllt ist.

Ein Weichzeichnungsalgorithmus, der den beiden obengenannten Anforderungen I) und II) gerecht wird, wird vorzugsweise abhängig von der Auflösung des Originalbildes, der Rasterweite und der Auflösung des Zielbildes parametrisiert.

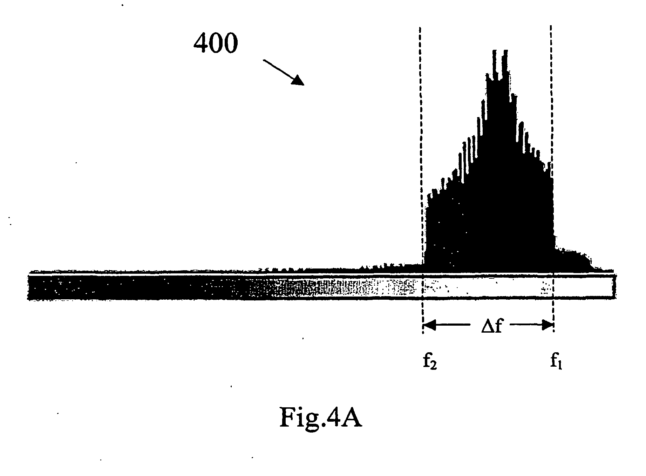

Mittels eines in solcher Weise geeignet parametrisierten Weichzeichnungsalgorithmus läßt sich ausgehend von dem in **Fig.2a** dargestellten Bildausschnitt 200 z.B. das in **Fig.4a** dargestellte Histogramm 400 der prozentualen Verteilung der Tonwerte erreichen, wie im folgenden näher erläutert wird.

Betrachtet man in dem in **Fig. 4a** gezeigten Histogramm die oberhalb einer bestimmten Grenze P' liegenden Häufigkeitswerte und den Bereich der Abszisse (x-Achse), über den sich diese Häufigkeitswerte P > P' erstrecken, so zeigt sich, daß die prozentuale Häufigkeitsverteilung der Flächenbedeckungswerte im wesentlichen auf einen eng umgrenzten Bereich Δf der Abszisse konzentriert ist, in welchem die Häufigkeitswerte P ein ausgeprägtes Maximum bildes.

Quantitativ bedeutet dies, daß beispielsweise ausgehend von dem in **Fig.4a** erreichten Maximum Pₘₐₓ der Häufigkeitsverteilung die Farbbedeckungswerte, denen eine noch oberhalb von P= 0,2 liegende Häufigkeit zuzuordnen ist, in einem relativ eng begrenzten Bereich der Abszisse liegen. Dies bedeutet bei dem in **Fig.4a** gezeigten Ausführungsbeispiel, daß diese Farbbedeckungwerte in einem Bereich von nur Δf' = 25 % der gesamten Abszisse konzentriert sind, also etwa in dem Intervall der Abszisse zwischen f₁= 10 % und f₂= 35 % Flächendeckung.

Infolge der in **Fig.4a** gezeigten Verteilung der Zwischentonwerte lassen sich bestimmte Helligkeitsbereiche bzw. Flächendeckungswerte des jeweiligen Bildausschnitts, nämlich etwa die im Bereich innerhalb oder außerhalb des o.g. Bereichs zwischen 10-prozentiger und 35-prozentiger Flächenbedeckung gezielt beeinflussen, ohne dabei sämtliche oder eine große Anzahl anderer Helligkeitsbereiche gleichzeitig mit zu verändern. Dies ermöglicht die Durchführung eines effektiven Farbmanagements zur Abstimmung auf das Farbverhalten des Proof-Geräts, so daß die Farbverbindlichkeit gewährleistet werden kann und die obige Anforderung II) erfüllt ist.

Bei Verwendung des Gaußschen Weichzeichners ist der einzig veränderbare Parameter der Radius des Weichzeichnungsfensters, bei anderen vergleichbaren Algorithmen ist es die Fenstergröße des Filters. Für die Erlangung eines optimalen Ergebnisses kann mittels eines Computerprogrammes dieser Radius oder diese Fenstergröße über einem vorher definierten Testabschnitt des Bildes so lange variiert werden, bis ein Histogramm, wie es anhand von **Fig. 4a** beschrieben wurde, daraus resultiert. Der so gefundene Wert wird danach für das Weichzeichnen des gesamten Bildes angewendet.

Ein Algorithmus zur Ermittlung des geeigneten Radius des Weichzeichners wird im folgenden unter Bezugnahme auf **Fig. 4b** näher erläutert.

In einem ersten Schritt S₁ wird ein Startwert R= R₀ als Radius des Weichzeichners gesetzt. Im nächsten Schritt S₂ wird für diesen Radius R anhand eines beliebig gewählten Bildausschnitts das oben beschriebene Histogramm ermittelt, d.h. für jeden Wert der prozentualen Flächendeckung f (zwischen und 100 %) wird die jeweilige Häufigkeit P (zwischen 0 und 1) berechnet.

In einem nächsten Schritt S₃ wird in dem in Schritt S₂ bestimmten Histogramm das Maximum Pₘₐₓ(f) bestimmt. Im folgenden wird angenommen, daß dieses bei einem Flächendeckungswert f= f₀ auftritt.

In einem nächsten Schritt S₄ wird im Histogramm vom Maximum Pₘₐₓ(f₀) beginnend nach beiden Seiten jeweils bis zu einem Flächenbedeckungswert gesucht, an dem der Häufigkeitswert P auf P < 0,2 abgefallen ist. Mit anderen Worten wird der größte Wert f₁ unterhalb von f₀ und der kleinste Wert f₂ oberhalb von f₀ bestimmt, bei dem die zugehörigen Häufigkeitswerte im Histogramm weniger als 0,2 betragen.

Im Schritt S₅ wird die Differenz Δf zwischen den so ermittelten Werten f₁ und f₂ errechnet.

Im Schritt S₆ wird abgefragt, ob diese Differenz Δf kleiner ist als Δf'= 25 %.

Ist dies der Fall, wird der aktuelle Radiuswert R₀ ausgegeben und dieser Radius wird zur Weichzeichnung für das gesamte Bild verwendet. Ist dies jedoch nicht der Fall, wird der Radius um ein Inkrement ΔR zu R= R₀ + ΔR erhöht und der Algorithmus wird für diesen Wert R von neuem durchgeführt. Dies wird so lange wiederholt, bis das oben genannte Intervall Δf zwischen f₁ und f₂ hinreichend eingeschränkt, d.h. die im Schritt S₆ abgefragte Bedingung erfüllt ist. Sobald dies erfüllt ist, wird der Algorithmus abgebrochen und der ermittelte Radius R wird zur Weichzeichnung für das gesamte Bild verwendet.

Selbstverständlich können je nach den speziellen Gegebenheiten bzw. Anforderungen in dem Algorithmus von **Fig.4b** statt des Abszissenbereichs von Δf' = 25 % oder statt des Häufigkeitsgrenzwertes von P'= 0,2 auch andere Werte für Δf' und P' verwendet werden.

Eine weitere Möglichkeit des Weichzeichnens besteht darin, bei einer eventuell notwendigen Skalierung der gerasterten Druckdaten 503 von der Auflösung der Druckmaschine 504 auf die Auflösung des Proofgeräts 103 einen Skalierungsalgorithmus zu verwenden, der einen Weichzeichnungseffekt besitzt. Beispiele dafür sind als bikubisches oder bilineares Skalieren bekannt. Diese Skalierungsmethoden interpolieren die zu skalierenden Werte auf eine Weise, dass das Ergebnis dem Effekt des Weichzeichnens gleich ist. Das Skalierungsverfahren sollte die Anpassung der Auflösung in einer solchen Art und Weise durchführen, daß keine störenden Strukturen oder Artefakte entstehen.

Da in den seltensten Fällen die Auflösung der gerasterten Druckdaten mit der Auflösung des Proofgeräts übereinstimmt, müssen die Druckdaten meist sowieso skaliert werden. Deshalb bietet es sich an, hier gleich einen solchen Algorithmus zu verwenden.

## Patentansprüche

1. Verfahren zum Proofen von gerasterten Druckdaten (503) unter Beibehaltung der Rasterinformation, wobei die Druckdaten (503) binäre Tonwerte aufweisen, umfassend
ein Filtern der gerasterten Druckdaten (503), und
Bilden von mittels einer Farbraumtransformation transformierten Tonwerten und Zwischentonwerten für die gefilterten, gerasterten Daten (102), welche einen farbverbindlichen Proof (104) darstellen,
**gekennzeichnet dadurch, dass**
als Filterverfahren ein Weichzeichnungsverfahren (101) eingesetzt wird, welches die Rasterinformationen beibehält und Zwischentonwerte erzeugt und bei welchem ein Weichzeichnungsradlus. R mittels folgender Schritte ausgewählt wird:
a) Berechnen der Häufigkeitsverteilung P(f) der prozentualen Flächendeckung f (0 ≤ P ≤ 1,0 ≤ f ≤ 100%) für einen vorgegebenen Weichzeichnungsradius R=R₀;
b) Bestimmen eines Flächendeckungswerts f₀ an welchem das Maximum Pₘₐₓ(t₀) auftritt;
c) Ermitteln des grössten Wertes f₁ und des kleinsten Wertes f₂ mit f₁ < f₀ < f₂, für die gilt P(f₁) < P' und P(f₂) < P, wobei P' ein vorgegebener Häuligkeitsächwellwert mit 0 < P'< 1 ist;
d) falls f₂-f₁ ≤ Δf', wobei Δf' ein vorgegebener Schwellwert mit 0 < Δf' < 100% ist: Berechnen der Häuflgkeitsvertellung P(f) für einen um einen vorgegebenen Wert AR erhöhten Weichzeichnungsradius;
e) Wiederholen der Schritte b) - d) und Vermittlung eines Weichzeichnungsradius R, bei
f) Ausgeben des Weichzeichnungsradius R.
X₁: dem f₂-f₁ > Δf' ist;

2. Verfahren nach Anspruch 1, wobei Δf' im Bereich von 20%-30% liegt.

3. Verfahren nach Anspruch 1 oder 2, wobei P' im Bereich zwischen 0.15 und 0.25 liegt.

4. Verfahren nach einem der Ansprüche 1 bis 3, bei dem als binärer Tonwert und/oder als Zwischentonwert ein Luminanzwert und/oder ein Chrominanzwert verwendet wird/werden.

5. Verfahren nach einem der Ansprüche 1 bis 4, bei dem als Rasterinformation
• die Rasterweite,
• der Rasterwinkel und
• die Punktform des Rasters
verwendet wird.

6. Vorrichtung zum Proofen von gerasterten Druckdaten (503) unter Beibehaltung der Rasterinformation, wobei die Druckdaten (503) binäre Tonwerte aufweisen,
mit einem Prozessor, der derart eingerichtet ist,
dass die gerasterten Druckdaten einem Filterverfahren unterzogen werden, und
dass mittels einer Farbraumtransformation transformierte Tonwerte und Zwischentonwerte für die gefiltertem, gerasterten Daten (102) gebildet werden, welche den farbverbindlichen Proof (104) darstellen,
**gekennzeichnet dadurch,**
**dass** als Filterverfahren ein Weichzeichnungsverfahren (101) eingesetzt wird, welches die Rasterinformation beibehält und Zwischentonwerte erzeugt und
**dass** die Vorrichtung zum Durchführen folgender Schritte zur Auswahl des Weichzeichnungsradius R eingerichtet ist:
a) Berechnen der Häufigkeitsverteilung P(f) der prozentualen Flächendeckung f (0 ≤ P ≤ 1, 0 ≤ f ≤ 100%) für einen vorgegebenen Weichzeichnungsradius R= R₀;
b) Bestimmen eines Flächendeckungswerts f₀ an welchem das Maximum Pₘₐₓ(f₀) auftritt;
c) Ermitteln des grössten Wertes f₁ und des kleinsten Wertes f₂ mit f₁ < f₀ < f₂, für die gilt P(f₁) < P' und P(f₂) < P', wobei P' ein vorgegebener Häufigkeitsschwellwert mit 0 < P'< 1 ist;
d) falls f₂-f₁ ≤ Δf', wobei Δf' ein vorgegebener Schwellwert mit 0 < Δf' < 100% ist: Berechnen der Häufigkeitsverteilung P(f) für einen um einen vorgegebenen Wert ΔR erhöhten Weichzeichnungsradius;
e) Wiederholen der Schritte b) - d) und Ermittlung eines Weichzeichnungsradius R, bei dem f₂-f₁, > Δf' ist;
f) Ausgeben des Weichzeichnungsradius R.

## Claims

1. A method of proofing of screened printing data (503) while maintaining raster information, the printing data (503) comprising binary tonal values, the method comprising:
filtering the screened printing data (503), and
providing transformed tonal values and intermediate tonal values for filtered, screened data (102) formed by means of a color space transformation which represents a true-to-color proof (104),
**characterized in that**
as a filtering method a softening method (101) is used, which maintains the raster information and produces intermediate tonal values, and wherein a softening radius R is chosen by the following steps:
a) calculation of the frequency distribution P(f) of the percentage area coverage f (0 ≤ P ≤ 1, 0 ≤ f ≤ 100%) for a predefined softening radius R=R₀;
b) determination of an area coverage value f₀ at which Pₘₐₓ(f₀) is maximum;
c) determination of the maximum value f₁ and of the minimum value f₂, with f₁ < f₀ < f₂, for which P (f₁) < P' and P (f₂) < P', wherein P' is a predefined frequency limiting value with 0 < P' < 1;
d) if f₂ - f₁ ≤ Δf', wherein Δf' is a predefined limiting value with 0 < Δf' < 100%: calculation of the frequency distribution P(f) for a softening radius increased by a predefined value ΔR;
e) repetition of the steps b)-d) and determination of a softening radius R at which f₂ - f₁ > Δf';
f) output of the softening radius R.

2. The method according to claim 1, wherein Δf' is in the range from 20% - 30%.

3. The method according to claim 1 or 2, wherein P' is in the range between 0.15 and 0.25.

4. The method according to anyone of claims 1 to 3, in which the binary tonal value and/or the intermediate tonal value used is/are a luminance value and/or chrominance value.

5. The method according to anyone of claims 1 to 4, in which the raster information used is
• the screen resolution,
• the screen angle and
• the dot shape of the screen.

6. A device for proofing screened printing data (503) while maintaining the raster information, wherein the printing data (503) comprise binary tonal values,
with a processor which is set up in such a way that
the screened printing data are subjected to a filtering method, and
that transformed tonal values and intermediate tonal values for filtered, screened data (102) are formed by means of a color space transformation, which represent the true-to-color proof (104),
**characterized in that**
as a filtering method a softening method (101) is used, which maintains the raster information and produces intermediate tonal values and
that the device is set up for executing the following steps to select the softening radius R:
a) calculation of the frequency distribution P(f) of the percentage area coverage f (0 ≤ P ≤ 1, 0 ≤ f ≤ 100%) for a predefined softening radius R=R₀;
b) determination of an area coverage value f₀ at which Pₘₐₓ (f₀) is maximum;
c) determination of the maximum value f₁ and of the minimum value f₂ with f₁ < f₀ < f₂, for which P (f₁) < P' and P (f₂) < P', wherein P' is a predefined frequency limiting value with 0 < P' < 1;
d) if f₂ - f₁ ≤ Δf', wherein Δf' is a predefined limiting value with 0 < Δf' < 100%: calculation of the frequency distribution P(f) for a softening radius increased by a predefined value ΔR;
e) repetition of the steps b)-d) and determination of a softening radius R at which f₂ - f₁ > Δf';
f) output of the softening radius R.

## Revendications

1. Procédé de tirage d'épreuves de données d'impression tramées (503) avec conservation des informations de tramage, dans lequel les données d'impression (503) présentent des valeurs tonales binaires, comprenant :
le filtrage des données d'impression tramées (503), et
la formation de valeurs tonales et de valeurs tonales intermédiaires transformées au moyen d'une transformation de l'espace chromatique pour les données filtrées et tramées (102), lesquelles représentent une épreuve en couleurs (104),
**caractérisé en ce que**
l'on met en place comme procédé de filtrage un procédé de diffusion (101), lequel conserve les informations de tramage et génère des valeurs tonales intermédiaires et dans lequel on choisit un rayon de diffusion R en respectant les étapes suivantes consistant à :
a) calculer la distribution de fréquence P(f) de la zone de couverture en pour cent f (0 ≤ P ≤ 1, 0 ≤ f ≤ 100 %) pour un rayon de diffusion prédéfini R = R₀ ;
b) déterminer une valeur de la zone de couverture f₀ à laquelle se manifeste le maximum Pₘₐₓ(f₀) ;
c) établir la plus grande valeur de f₁ et la plus petite valeur de f₂ avec f₁ < f₀ < f₂, où P(f₁) < P' et P(f₂) < P', P' étant une valeur seuil de fréquence prédéfinie avec 0 < P'< 1 ;
d) si f₂-f₁ ≤ Δf, Δf' étant une valeur seuil prédéfinie avec 0 < Δf' < 100 % : calculer la distribution de fréquence P(f) pour un rayon de diffusion augmenté d'une valeur ΔR prédéfinie ;
e) répéter les étapes b) à d) et établir un rayon de diffusion R pour lequel f₂-f₁ > Δf' ; et
f) fournir le rayon de diffusion R.

2. Procédé selon la revendication 1, dans lequel Δf se situe dans la plage 20%-30%.

3. Procédé selon la revendication 1 ou 2, dans lequel P' se situe dans la plage comprise entre 0,15 et 0,25.

4. Procédé selon l'une quelconque des revendications 1 à 3, dans lequel on utilise comme valeur tonale binaire et/ou comme valeur tonale intermédiaire une valeur de luminance et/ou une valeur de chrominance.

5. Procédé selon l'une quelconque des revendications 1 à 4, dans lequel on utilise comme informations de tramage :
• la largeur de trame,
• l'angle de trame et
• la forme du point de la trame.

6. Dispositif de tirage d'épreuves de données d'impression tramées (503) avec conservation des informations de tramage, dans lequel les données d'impression (503) présentent des valeurs tonales binaires,
avec un processeur qui est agencé de sorte
que les données d'impression tramées sont soumises à un procédé de filtrage, et
que des valeurs tonales et des valeurs tonales intermédiaires transformées au moyen d'une transformation de l'espace chromatique sont formées pour les données filtrées et tramées (102), lesquelles représentent l'épreuve en couleurs (104),
**caractérisé en ce que**
l'on met en place comme procédé de filtrage un procédé de diffusion (101) lequel conserve les informations de tramage et génère des valeurs tonales intermédiaires, et
le dispositif est agencé de telle sorte que les étapes suivantes soient respectées pour choisir le rayon de diffusion R :
a) calculer la distribution de fréquence P(f) de la zone de couverture en pour cent f (0 ≤ P ≤ 1, 0 ≤ f ≤ 100 %) pour un rayon de diffusion prédéfini R = R₀ ;
b) déterminer une valeur de zone de couverture f₀ à laquelle se manifeste le maximum Pₘₐₓ(f₀) ;
c) établir la plus grande valeur de f₁ et la plus petite valeur de f₂ avec f₁ < fo < f₂, où P(f1) < P' et P(f₂) < P', P' étant une valeur seuil de fréquence prédéfinie avec 0 < P'< 1 ;
d) si f₂-f₁ ≤ Δf', Δf' étant une valeur seuil prédéfinie avec 0 < Δf' < 100 % : calculer la distribution de fréquence P(f) pour un rayon de diffusion augmenté d'une valeur ΔR prédéfinie ;
e) répéter les étapes b) à d) et établir un rayon de diffusion R pour lequel f₂-f₁ > Δf' ; et
f) fournir le rayon de diffusion R.
